# EUROPEAN PATENT APPLICATION

(11) **EP 4 807 544 A1**
(43) Date of publication of application: **16.09.2026**
(21) Application number: 25878783.7
(22) Date of filing: 12.08.2025
(51) Int. Cl.: G06F 9/451

(54) **METHOD AND APPARATUS FOR CONTROLLING DISPLAY SCREEN, COMPUTER-READABLE STORAGE MEDIUM, AND VEHICLE**

(30) Priority: 15.10.2024 CN 202411439957
(71) Applicant: Chery Automobile Co., Ltd., Wuhu, Anhui 241006 (CN); Lion Automotive Technologies Nanjing Co., Ltd., Nanjing, Jiangsu 210046 (CN); Wuhu Lion Automotive Technologies Co., Ltd., Wuhu, Anhui 241006 (CN)
(72) Inventor: ZAI, Yu, Wuhu, Anhui 241006 (CN)
(74) Representative: Adamson Jones
(86) International application number: PCT/CN2025/114203
(87) International publication number: WO 2026/081642

(57) **Abstract**

A method and apparatus for controlling a display screen, a computer-readable storage medium, and a vehicle. The method comprises: determining a target page view element that changes when a display screen is switched between a day mode and a night mode (S1); and when it is determined that the display screen has been switched between the day mode and the night mode, adjusting attributes of the target page view element on the basis of the current mode of the display screen (S2).

## Description

The present disclosure claims priority to Chinese Patent Application No. 202411439957.6, filed October 15, 2024, and entitled "METHOD AND APPARATUS FOR CONTROLLING DISPLAY SCREEN, COMPUTER-READABLE STORAGE MEDIUM, AND VEHICLE", the entire contents of which are incorporated herein by reference.

### TECHNICAL FIELD

The present disclosure relates to the field of display screen technology, and in particular, relates to a method for controlling a display screen, a computer-readable storage medium, a vehicle, and an apparatus for controlling a display screen.

### BACKGROUND

Cockpit applications provide a day-night mode according to different user needs, ensuring user-friendly operation under different brightness conditions. For example, display screens such as central control screens in vehicles are provided with a day mode and a night mode for users to choose from.

Currently, there are mainly two methods to realize the switching of the day-night mode: One method is to manually switch day-night mode resources to realize the switching of day-night mode, but this method has the disadvantage of requiring a large amount of preliminary workload, difficult subsequent expansion and maintenance, and providing a poor user experience. The other method is to destroy and recreate the application page, which automatically exits the current display interface and recreates a new display interface. This results in a poor user experience, cumbersome maintenance of application page states, and high resource consumption.

### SUMMARY

The present disclosure aims to solve at least one of the technical problems in the related art to a certain extent. To this end, the objective of the present disclosure is to provide a method for controlling a display screen. The method determines a target page view element that changes with switching of a day-night mode of the display screen, and adjusts, in a case of determining the switching of the day-night mode of the display screen, an attribute of the target page view element according to a current mode of the display screen. This enables faster switching of the day-night mode, consumes less CPU and memory during the switching process, reduces adaptation workload, and improves the scalability and maintainability of subsequent display interface.

One objective of the present disclosure is to provide a computer-readable storage medium.

Another objective of the present disclosure is to provide a vehicle.

Another objective of the present disclosure is to provide an apparatus for controlling a display screen.

To achieve the above objectives, the embodiments of the present disclosure provide a method for controlling a display screen. The method includes: determining a target page view element that changes with switching of a day-night mode of the display screen; and adjusting, in the case of determining the switching of the day-night mode of the display screen, an attribute of the target page view element according to a current mode of the display screen.

According to the method for controlling a display screen in the embodiments of the present disclosure, the target page view element that changes with switching of the day-night mode of the display screen is determined. In the case of determining the switching of the day-night mode of the display screen, the attribute of the target page view element is adjusted according to the current mode of the display screen. Therefore, this method can achieve faster switching of the day-night mode, consume less CPU and memory during the switching process, reduce adaptation workload, and improve the scalability and maintainability of subsequent display interface.

In addition, the method for controlling a display screen according to the above embodiments of the present disclosure may further have the following additional technical features:

According to an embodiment of the present disclosure, the target page view element includes at least one of a page background image, text, a click effect, a text editing box, and a button style.

According to an embodiment of the present disclosure, determining the target page view element that changes with switching of the day-night mode of the display screen includes: determining the page view element whose attribute changes with the switching of the day-night mode as the target page view element.

According to one embodiment of the present disclosure, the attribute includes at least one of color, transparency, brightness, contrast, text attribute, and interactive feedback.

According to an embodiment of the present disclosure, adjusting the attribute of the target page view element based on the current mode of the display screen includes: controlling, in the case where the display screen is switched from the night mode to the day mode, the attribute of the target page view element to be adjusted to an attribute corresponding to the day mode; and controlling, in the case where the display screen is switched from the day mode to the night mode, the attribute of the target page view element to be adjusted to an attribute corresponding to the night mode.

According to an embodiment of the present disclosure, determining the switching of the day-night mode of the display screen includes: acquiring current position information of a vehicle; determining sunrise time and sunset time of the position where the vehicle is located based on the position information; and determining, in the case where current time reaches the sunrise time or the sunset time, the switching of the day-night mode of the display screen.

According to an embodiment of the present disclosure, determining the switching of the day-night mode of the display screen includes: acquiring a brightness of a current environment; and determining, in the case where the brightness reaches a preset brightness threshold, the switching of the day-night mode of the display screen.

To achieve the above objectives, the embodiments of the present disclosure provide a computer-readable storage medium having a program stored thereon, wherein the program, when executed by a processor, causes the processor to perform the above-mentioned method for controlling a display screen.

According to the computer-readable storage medium of the embodiments of the present disclosure, by performing the aforementioned method for controlling a display screen, it can achieve faster switching of the day-night mode, consume less CPU and memory during the switching process, reduce the adaptation workload, and improve the scalability and maintainability of subsequent display interface.

To achieve the above objectives, the embodiments of the present disclosure provide a vehicle. The vehicle includes a memory, a processor, and a program stored on the memory and executable by the processor, wherein the program, when executed by the processor, causes the processor to perform the method for controlling a display screen as described above.

According to the vehicle embodiments of the present disclosure, the aforementioned method for controlling a display screen is performed, which can faster the switching of the day-night mode, consume less CPU and memory during the switching process, reduce the adaptation workload, and improve the scalability and maintainability of subsequent display interface.

To achieve the above objectives, the embodiments of the present disclosure provide an apparatus for controlling a display screen. The apparatus includes: a determination module configured to determine a target page view element that changes with switching of a day-night mode of the display screen; and a control module configured to adjust, in a case of determining the switching of the day-night mode of the display screen, an attribute of the target page view element according to a current mode of the display screen.

According to the apparatus for controlling a display screen in embodiments of the present disclosure, a determination module is used to determine the target page view elements that changes with switching of the day-night mode of the display screen, and a control module is used to adjust, in a case of determining the switching of the day-night mode of the display screen, the attribute of the target page view element according to the current mode of the display screen. As a result, the device can faster the switching of the day-night mode, consume less CPU and memory during the switching process, reduce the adaptation workload, and improve the scalability and maintainability of subsequent display interfaces.

Additional aspects and advantages of the present disclosure will be set forth in part in the description, and will become apparent in part from the following description or be learned through practice of the present disclosure.

### BRIEF DESCRIPTION OF DRAWINGS

FIG. 1 is a flowchart of a method for controlling a display screen according to some embodiments of the present disclosure;
FIG. 2 is a flowchart of a method for controlling a display screen according to an example of the present disclosure;
FIG. 3 is a block diagram of a vehicle according to some embodiments of the present disclosure;
FIG. 4 is a block diagram of an apparatus for controlling a display screen according to some embodiments of the present disclosure;
FIG. 5 is a schematic structural diagram of a vehicle according to some embodiments of the present disclosure; and
FIG. 6 is a schematic structural diagram of a vehicle according to some embodiments of the present disclosure.

### DETAILED DESCRIPTION

The embodiments of the present disclosure are described in detail below, and examples of the embodiments are shown in the accompanying drawings, wherein the same or similar reference numerals throughout indicate the same or similar elements or elements having the same or similar functions. The embodiments described below with reference to the accompanying drawings are exemplary and are intended to explain the present disclosure, and should not be construed as limiting the present disclosure.

For current display screens such as central control screens or instrument panels on vehicles, the existing technical solution requires destroying the daytime page and recreating the nighttime page when switching of the day-night mode. During this process, issues such as page lag and slow loading are prone to occur, severely affecting the user experience. In the technical solution of the present disclosure, the colors of elements such as backgrounds, text, images, and controls in the page can be recorded. When switching of the day-night mode, it is only necessary to replace the aforementioned elements with corresponding colors of the nighttime page, without reloading the entire page, thereby improving switching smoothness, consuming less central processing unit (CPU) and memory, reducing adaptation workload, and improving the scalability and maintainability of subsequent display interfaces.

Below, a method for controlling a display screen, a computer-readable storage medium, a vehicle, and an apparatus for controlling a display screen provided in embodiments of the present disclosure will be described with reference to the accompanying drawings.

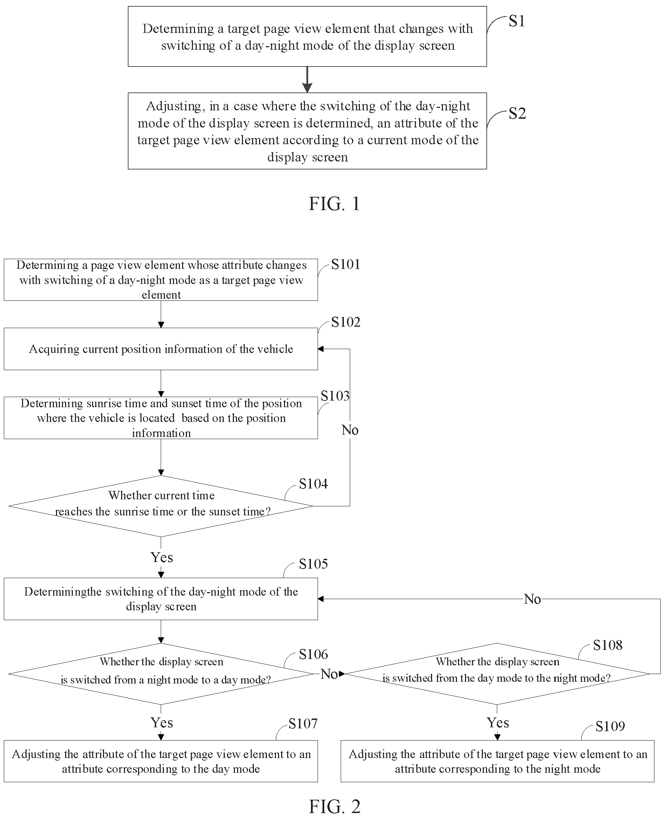

FIG. 1 is a flowchart of a method for controlling a display screen according to some embodiments of the present disclosure.

As shown in FIG. 1, the method for controlling a display screen in embodiments of the present disclosure may include the following steps:
In S1, a target page view element that changes with switching of a day-night mode of the display screen is determined.
In S2, in the case of determining the switching of the day-night mode of the display screen, an attribute of the target page view element is adjusted according to a current mode of the display screen.

In some embodiments, the display screen refers to an electronic screen device used for presenting visual information on a vehicle. Optionally, the display screen includes, but is not limited to, at least one of a display screen of a vehicle center control screen, a display screen of a vehicle instrument panel, and a display screen of a vehicle passenger seat. The present disclosure is not limited thereto.

In some embodiments, to improve user comfort, the display screen is provided with a day-night mode. The day-night mode refers to a mode that adjusts the display brightness and color scheme of the display screen according to the ambient light intensity or the time and requirements set by the user. Optionally, the day-night mode includes a day mode and a night mode. In the day mode, the display screen has a relatively high display brightness, which can ensure that users can still see the content of the display screen clearly during the day. In the night mode, the display screen has a relatively low display brightness, which can ensure that users can comfortably view the screen at night without causing poor user experience due to excessively high brightness.

In some embodiments, switching of the day-night mode of the display screen includes switching the display screen from the day mode to the night mode, or switching the display screen from the night mode to the day mode.

In some embodiments, during the switching process of the day-night mode of the display screen, to improve the smoothness of the mode switching, it is possible to first determine the target page view element that changes with the switching of the day-night mode of the display screen. That is, the target page view element changes in different modes. The target page view element refers to a view element displayed on the display screen. For example, the target page view element may be the text color, that is, the color of the text displayed on the display screen differs between the day mode and the night mode.

In some embodiments, in the case where the day-night mode of the display screen is switched, the attribute of the target page view element can be adjusted according to the current mode of the display screen. For example, a scheduled task may be used to check the time, thereby determining whether it is currently daytime or nighttime. When a mode change is detected, resources corresponding to the mode need to be loaded. For example, if the current mode is the night mode, resources such as background images and text colors in the night mode may be loaded. In addition, the attribute of the target page view element may be updated, such as changing a CSS style, including color, font, spacing, and layout. After the attribute is updated, the view needs to be re-rendered to reflect these changes. This can improve the switching smoothness, consume less CPU and memory, reduce adaptation workload, and improve the scalability and maintainability of subsequent display interfaces.

According to an embodiment of the present disclosure, the target page view element includes at least one of a page background image, text, a click effect, a text editing box, and a button style.

Specifically, the target page view element may include one or more of a background image, text (text size and/or text color), a click effect, a text editing box, and a button style, which can be determined based on the layout of the currently displayed interface. The background image may provide a visual background for the page, helping to set the overall atmosphere and style of the page. When selecting the background image, consideration can be given to its contrast with foreground elements to ensure the readability of text and important information. Different background images may be used for the day mode and the night mode to adapt to different lighting conditions.

The text is the primary way to convey information, including titles, paragraphs, labels, and the like. Selecting an appropriate font, font size, color, and line spacing can ensure the readability and aesthetics of the text. In addition, to improve readability, the text color needs to be adjusted according to the brightness of the background. The click effect provides immediate feedback on a user operation, improving an interactive experience. The click effect should be intuitive and consistent with the overall design style, such as the color change or water ripple effect when a button is pressed. The visual effect of the control when clicked may be adjusted according to different modes.

The text editing box allows users to input text, such as a search box, a form input, and the like. The dimensions, border, inner padding, and placeholder text of the editing box all need to be considered to ensure the convenience and accuracy of user input. In addition, the border color and the background of the input box may be adjusted according to different modes. The Button is an important element for users to perform operations, such as submitting a form, triggering an event, and the like. The button style, such as the text color and background on the button, may be adjusted according to different modes.

According to an embodiment of the present disclosure, determining the target page view element that changes with switching of the day-night mode of the display screen includes: determining a page view element whose attribute changes with the switching of the day-night mode as the target page view element.

Specifically, the target page view element refers to a page element that needs to change its attribute to adapt to different lighting conditions according to whether the current mode is the day mode or the night mode. That is, when determining the target page view element that changes with the switching of the day-night mode of the display screen, the page view element whose attribute changes with the switching of the day-night mode may be used as the target page view element. For example, for the page background image and color, the day mode may use a bright or colored background, while the night mode may use a dark or dim background to reduce the stimulation of screen brightness on the user's eyes. For another example, the click effect may need to be adjusted to ensure clear visibility in different modes. For example, the button click effect in the day mode is a dark shadow, while in the night mode it is a light shadow.

In some embodiments, the priority of the target page view element that changes is determined. In the case of determining the switching of the day-night mode of the display screen, the attribute of the target page view element is adjusted according to the priority order in the priority queue based on the current mode of the display screen. Different target page view elements have different priority orders. For example, the priority of the page background image is higher than that of the text. In the case where the day-night mode is switched, the attribute of the page background image is preferentially adjusted, and then the attribute of the text is adjusted.

Optionally, the priority of the target page view element that changes may be determined according to the user usage frequency; or, the priority of the target page view element that changes may be determined according to the scene importance; or, the priority of the target page view element that changes may be determined according to the user usage frequency and the scene importance. The present disclosure is not limited thereto.

In some embodiments, the priority of the target page view element that changes is determined according to the user's usage frequency. Optionally, the priority value of the target page view element is calculated based on the user's historical interaction data, and the target page view element is stored in a priority queue according to its priority value. The historical interaction data may be the number of clicks the user has made on the target page view element in the past. The target page view element with higher historical interaction data corresponds to a higher priority value, which means that the target page view element also has a higher priority order in the priority queue.

In some embodiments, the priority of the target page view element that changes is determined according to the scene importance. Optionally, the priority value of the target page view element is calculated according to the driving scenario in which the user is located, and the target page view element is stored in a priority queue according to its priority value. The scene importance is used to indicate the importance of the target page view element in the driving scenario in which the user is located. The target page view element with a higher scene importance corresponds to a higher priority value, which means that the target page view element also has a higher priority order in the priority queue. For example, in a driving scenario in which the user is located at night, when visibility is poor, the user needs to clearly see the text on the display screen. At this time, the scene importance of the text on the display screen is higher, and when adjusting the attribute of the target page view element, priority is given to adjusting the attribute of the text on the display screen (such as text size or text color).

It should be noted that in the case where network resources are poor or latency is high, the attribute of the target page view element may be adjusted according to the priority order in the priority queue, which can reduce the response delay when updating the target page view element. In the case where network resources are good, or no latency exists, the attribute of the target page view element may also be adjusted simultaneously. The present disclosure is not limited thereto.

According to one embodiment of the present disclosure, the attribute includes at least one of color, transparency, brightness, contrast, text attribute, and interactive feedback.

Specifically, the attribute of the target page view element may include one or more of color, transparency, brightness, contrast, text attributes, and interactive feedback. For example, the attribute includes color, which is one of the most basic visual attributes in design. It can be used to distinguish different elements, convey information, or create a visual hierarchy. To improve readability, the text color needs to be adjusted according to the brightness of the background.

The transparency determines the visibility degree of an element, with values ranging from 0 (completely transparent) to 1 (completely opaque). In cascading style sheets (CSS), transparency may be set by the opacity property. The brightness refers to the brightness or darkness of a color. The brightness can help users distinguish different elements or create different visual focal points. In CSS, the brightness can be achieved by adjusting the brightness of a color, such as using the brightness value in the HSL (Hue, Saturation, Lightness) color model. The contrast refers to the difference in degree between colors, and high contrast can help users more easily distinguish different elements. In design, ensuring sufficient contrast is important for improving readability and accessibility. The text attribute includes font, font size, line height, word spacing, text color, text alignment, and the like. The interactive feedback refers to the response when a user interacts with a page element, such as button clicking, sliding, hovering, and the like. The interactive feedback can be provided through visual changes (such as color changes, shadows, animations) or sounds. In CSS, pseudo-classes and transitions can be used to achieve interactive feedback.

According to an embodiment of the present disclosure, adjusting the attribute of the target page view element according to the current mode of the display screen includes: in the case where the display screen is switched from the night mode to the day mode, controlling the attribute of the target page view element to be adjusted to the attribute corresponding to the day mode; and in the case where the display screen is switched from the day mode to the night mode, controlling the attribute of the target page view element to be adjusted to the attribute corresponding to the night mode.

Specifically, when adjusting the attribute of the target page view element according to the current mode of the display screen, a determination is made on the current mode switch of the display screen. In the case where the display screen is switched from the night mode to the day mode, the attribute of the target page view element may be controlled to be adjusted to the attribute corresponding to the day mode. For example, a background corresponding to the day mode uses a bright-colored background, such as white or light gray, to adapt to a relatively strong ambient light, and dark-colored text, such as black or dark gray, is used to ensure readability of the text on the bright background. The bright-colored background and dark-colored borders or text are used to provide clear button boundaries and operability, and transparency and shadows are used to increase the sense of hierarchy of the interface.

In the case where the display screen is switched from the day mode to the night mode, the attribute of the target page view element may be controlled to be adjusted to the corresponding attribute in the night mode. For example, using a dark background, such as dark gray or black, can reduce the irritation of screen brightness on the eyes. Using light-colored text, such as white or light gray, ensures the readability of text on a dark background. Using a dark background with light-colored borders or text provides clear button boundaries and operability. Reducing the use of transparency and shadows can avoid visual interference in a dark environment.

According to an embodiment of the present disclosure, determining the switching of the day-night mode of the display screen includes: acquiring current position information of a vehicle; determining sunrise time and sunset time of the position where the vehicle is located based on the position information; and in the case where current time reaches the sunrise time or the sunset time, determining the switching of the day-night mode of the display screen.

Specifically, when the switching of the day-night mode of the display screen is determined, the current position information of the vehicle can be obtained. For example, the current position of the vehicle may be obtained via GPS. After acquiring the position information of the vehicle, the sunrise time and the sunset time of the position where the vehicle is located can be determined based on the position information. For example, a local database containing sunrise and sunset time data from various locations around the world can be created or used. This database may be pre-calculated and contain sunrise and sunset time data for multiple years. The sunrise time and the sunset time may be estimated by querying data of the closest location according to the position of the vehicle.

When determining the sunrise time and the sunset time of the vehicle, a determination is made on the current time. In the case where the current time reaches the sunrise time or the sunset time, the switching of the day-night mode of the display screen may be determined. For example, if the current time is after the sunrise time and before the sunset time, the display screen may be set to the day mode; otherwise, the display screen may be set to the night mode. In addition, at sunrise and sunset time, switching of the day-night mode may occur. For example, the sunrise time is 6 a.m. and the sunset time is 6 p.m., such that when the current time changes from 5:59 a.m. to 6 a.m., the mode of the display screen switches from the night mode to the day mode.

According to one embodiment of the present disclosure, determining the switching of the day-night mode of the display screen includes: acquiring the brightness of the current environment; and in the case where the brightness reaches a preset brightness threshold, determining the switching of the day-night mode of the display screen. The preset brightness threshold may be determined according to actual conditions.

Specifically, when determining the switching of the day-night mode of the display screen, the brightness of the current environment may be acquired. For example, the ambient light sensor (ALS) can be used to acquire the light intensity of the surrounding environment of the display screen. The preset brightness threshold refers to an ambient brightness standard that triggers mode switching, and the value may be set according to actual conditions. For example, the preset brightness threshold may be set to switch to the night mode when below 500 lux, and to switch to the day mode when above 500 lux. Therefore, a magnitude relationship between the brightness and the preset brightness threshold is determined. When the ambient brightness is below the preset brightness threshold, switching to the night mode is performed; when the ambient brightness is above the preset brightness threshold, switching to the day mode is performed.

For example, assume that there is a simple Android application with a main interface including a background image, several text labels, and a few buttons. Two sets of resources may first be defined in the resource files, one set for the day mode and the other for the night mode. For example, colors_day.xml and colors_night.xml may be created in the res/values directory to define color resources for the day mode and the night mode, respectively. When the application starts, an interceptor may be injected to listen for system mode changes, and a manager updates resources when the mode changes. When the system detects a mode change, the manager reads new resource files and updates the attributes of page elements. For example, the background image may be changed from drawable/day_background to drawable/night_background, and the text color may be changed from @color/day_text_color to @color/night_text_color. In this way, the application can switch seamlessly between the day mode and the night mode without reloading pages, thereby providing a smooth user experience.

Next, a method for controlling a display screen of the present disclosure will be described with reference to FIG. 2.

As an example, the method for controlling a display screen of the present disclosure may include the following steps:
In S101, a page view element whose attribute changes with switching of a day-night mode is determined as a target page view element.

The target page view element refers to a page element whose attribute needs to be changed to adapt to different lighting conditions, depending on whether the current mode is day mode or night mode. That is, when determining the target page view element that changes with the switching of the day-night mode of the display screen, a page view element whose attribute changes with the switching of the day-night mode may be regarded as the target page view element.

Optionally, the target page view element may include one or more of a background image, text (text size and/or text color), a click effect, a text editing box, and a button style.

In S102, the current position information of the vehicle is acquired.

In S103, sunrise time and sunset time of the position where the vehicle is located are determined based on the position information.

For example, the current position of the vehicle may be obtained via GPS. After acquiring the position information of the vehicle, the sunrise time and the sunset time of the position where the vehicle is located may be determined based on the position information. For example, a local database containing sunrise and sunset time data for various locations around the world can be created or utilized. This database may be pre-computed and contain sunrise and sunset time data for multiple years. The sunrise time and the sunset time may be estimated by querying data of the closest location according to the position of the vehicle.

In step S104, whether the current time reaches the sunrise time or the sunset time is determined. If yes, proceed to step S105; and if no, proceed to step S102.

In S105, the switching of the day-night mode of the display screen is determined.

In S106, whether the display screen is switched from a night mode to a day mode is determined. If yes, proceed to step S107; and if no, proceed to step S108.

In S107, the attribute of the target page view element is adjusted to an attribute corresponding to the day mode.

In step S108, whether the display screen is switched from the day mode to the night mode. If yes, proceed to step S109; and if no, proceed to step S105.

In S109, the attribute of the target page view element is adjusted to an attribute corresponding to the night mode.

In summary, according to the method for controlling a display screen in the embodiments of the present disclosure, the target page view element that changes with switching of a day-night mode of the display screen is determined. In the case of determining the switching of the day-night mode of the display screen, an attribute of the target page view element is adjusted according to a current mode of the display screen. Therefore, this method enables faster switching of the day-night mode, consumes less CPU and memory during the switching process, reduces adaptation workload, and improves the scalability and maintainability of subsequent display interfaces.

Corresponding to the above embodiments, the present disclosure also provides a computer-readable storage medium.

The computer-readable storage medium provided by the embodiments of the present disclosure. A program is stored on the computer-readable storage medium, and when executed by a processor, the program causes the processor to perform the aforementioned method for controlling a display screen.

According to the computer-readable storage medium provided by the embodiments of the present disclosure, the aforementioned method for controlling a display screen is performed, enabling faster switching of the day-night mode, consuming less CPU and memory during the switching process, reducing adaptation workload, and improving the scalability and maintainability of subsequent display interface.

Corresponding to the above embodiments, the present disclosure also provides a vehicle.

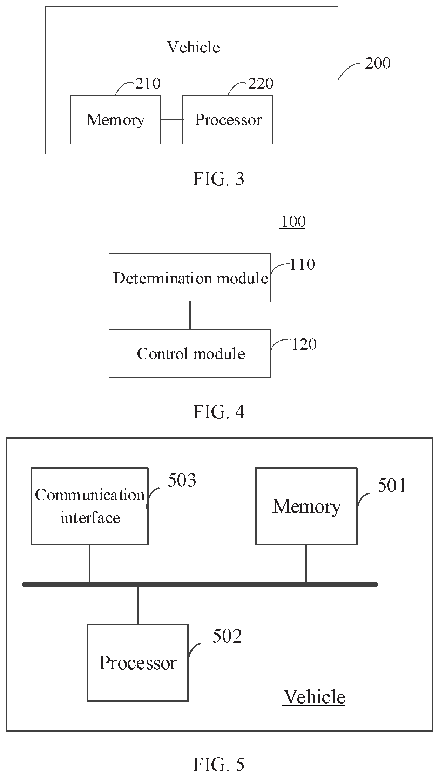

As shown in FIG. 3, the vehicle 200 of the embodiments of the present disclosure may include: a memory 210, a processor 220, and a program stored on the memory 210 and executable by the processor 220. The program, when executed by the processor 220, causes the processor 220 to perform the method for controlling a display screen described above.

The vehicle provided by the embodiments of the present disclosure, the aforementioned method for controlling a display screen is performed, enabling faster switching of the day-night mode, consuming less CPU and memory during the switching process, reducing adaptation workload, and improving the scalability and maintainability of subsequent display interface.

Corresponding to the above embodiment, the present disclosure also provides an apparatus for controlling a display screen.

As shown in FIG. 4, the apparatus for controlling a display screen 100 provided by the embodiments of the present disclosure includes: a determination module 110 and a control module 120.

The determination module 110 is used to determine a target page view element that changes with switching of a day-night mode of the display screen. The control module 120 is used to adjust, in the case of determining the switching of the day-night mode of the display screen, an attribute of the target page view element according to a current mode of the display screen.

According to an embodiment of the present disclosure, the target page view element includes at least one of a page background image, text color, a click effect, a text editing box, and a button style.

According to an embodiment of the present disclosure, the determination module 110 determines the target page view element that changes with switching of the day-night mode of the display screen, and is configured to: determine a page view element whose attribute changes with the switching of the day-night mode as the target page view element.

According to one embodiment of the present disclosure, the attributes include at least one of color, transparency, brightness, contrast, text attribute, and interactive feedback.

According to an embodiment of the present disclosure, the control module 120 adjusts the attribute of the target page view element according to the current mode of the display screen, and is configured to: control, in the case where the display screen is switched from the night mode to the day mode, the attribute of the target page view element to be adjusted to an attribute corresponding to the day mode; and control, in the case where the display screen is switched from the day mode to the night mode, the attribute of the target page view element to be adjusted to an attribute corresponding to the night mode.

According to one embodiment of the present disclosure, the determination module 110 determines the switching of the day-night mode of the display screen, and is configured to: the current position information of a vehicle; determine sunrise time and sunset time of the position where the vehicle is located based on the position information; and determine, in the case where current time reaches the sunrise time or the sunset time, the switching of the day-night mode of the display screen.

According to an embodiment of the present disclosure, the determination module 110 determines the switching of the day-night mode of the display screen, and is configured to: acquire a brightness of a current environment; and determine, in the case where the brightness reaches a preset brightness threshold, the switching of the day-night mode of the display screen.

It should be noted that for details not disclosed in the apparatus for controlling a display screen in the embodiments of the present disclosure, the details disclosed in the method for controlling a display screen according to the embodiments of the present disclosure will not be repeated herein.

According to the apparatus for control a display screen in embodiments of the present disclosure, the determination module is used to determine the target page view element that changes with switching of the day-night mode of the display screen, and the control module is used to adjust, in the case of determining the switching of the day-night mode of the display screen, the attribute of the target page view element according to the current mode of the display screen. As a result, the device enables faster switching of the day-night mode, consumes less CPU and memory during the switching process, reduces the workload of adaptation, and improves the scalability and maintainability of subsequent display interfaces.

FIG. 5 is a schematic structural diagram of a vehicle according to some embodiments of the present disclosure. The vehicle may include:
a memory 501, a processor 502, and computer programs stored on the memory 501 and executable by the processor 502.

The program, when executed by the processor 502, causes the processor 502 to perform the method for controlling a display screen provided in the aforementioned embodiments.

Furthermore, the vehicle further includes:
a communication interface 503 used for communication between the memory 501 and the processor 502.

The memory 501 is used to store computer programs that can run on the processor 502.

The memory 501 may include a high-speed random-access memory (RAM) storage, and may also include a non-volatile storage, such as at least one disk storage.

If the memory 501, the processor 502, and the communication interface 503 are implemented independently, the communication interface 503, the memory 501, and the processor 502 may be connected via a bus to complete mutual communication. The bus may be an industry standard architecture (ISA) bus, a peripheral component interconnect (PCI) bus, an extended industry standard architecture (EISA) bus, or the like. The bus may be divided into an address bus, a data bus, a control bus, and the like. For ease of representation, only one thick line is used in FIG. 5, but this does not mean that there is only one bus or only one type of bus.

Optionally, in specific implementations, if the memory 501, the processor 502, and the communication interface 503 are integrated onto a single chip, the memory 501, the processor 502, and the communication interface 503 may communicate with each other via an internal interface.

The processor 502 may be a central processing unit (CPU), an application-specific integrated circuit (ASIC), or one or more integrated circuits configured to implement embodiments of the present disclosure.

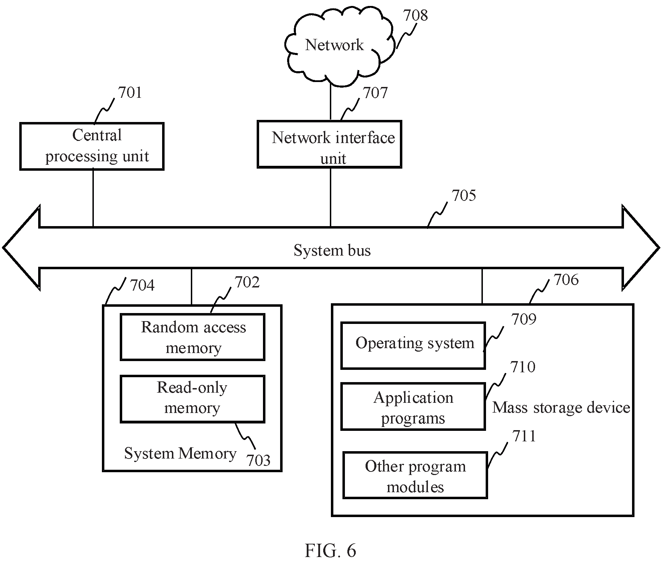

Furthermore, referring to FIG. 6, the memory, the processor, and the communication interface in the vehicle may be provided by a computer device deployed on the vehicle. The processor introduced in FIG. 5 may be implemented as a CPU 701, and the memory 501 includes a system memory 704 including a random-access memory (RAM) 702 and a read-only memory (ROM) 703. The bus is implemented as a system bus 705 connecting the system memory 704 and the central processing unit 701. The vehicle also includes a mass storage device 706 for storing an operating system 709, application programs 710, and other program modules 711.

The mass storage device 706 is connected to the central processing unit 701 via a mass storage controller (not shown) connected to the system bus 705. The mass storage device 706 and its associated computer-readable media provide a non-volatile storage for the vehicle. That is, the mass storage device 706 may include computer-readable media (not shown) such as a hard disk or a compact disc read-only memory (CD-ROM) drive.

Without loss of generality, the computer-readable medium may include computer storage media and communication media. The computer storage media includes volatile and non-volatile, removable and non-removable media implemented in any method or technology for storage of information such as computer-readable instructions, data structures, program modules, or other data. The computer storage media includes an RAM, an ROM, an erasable programmable read only memory (EPROM), an electrically-erasable programmable read-only memory (EEPROM), a flash memory, or other solid-state storage technology, a CD-ROM, a digital versatile disc (DVD) or other optical storage, a magnetic tape cartridge, a magnetic tape, a magnetic disk storage, or other magnetic storage devices. Of course, those skilled in the art will appreciate that the computer storage media are not limited to the above-mentioned types. The aforementioned system memory 704 and the mass storage device 706 may be collectively referred to as memory.

According to various embodiments of the present disclosure, the vehicle may also be operated by connecting to a remote computer on a network, such as the Internet. That is, the vehicle may be connected to the network 708 via the network interface unit 707 connected to the system bus 705, or may be connected to other types of networks or remote computer systems (not shown) via the network interface unit 707.

The memory also includes at least one computer program. At least one computer program is stored on the memory, and the central processing unit 701 executes the at least one computer program to perform all or part of the steps of the methods shown in the various embodiments described above.

The embodiments of the present disclosure further provide a computer-readable storage medium storing a computer program thereon. The program, when executed by a processor, causes the processor to perform the above-mentioned method for controlling a display screen.

The embodiments of the present disclosure further provide a computer program product, including a computer program or an instruction. The computer program or the instruction, when executed by a processor, causes the processor to perform the above-mentioned method for controlling a display screen.

In the description of this specification, references to terms such as "an embodiment", "some embodiments", "example", "examples", or "some examples" indicate that the specific features, structures, materials, or characteristics described in conjunction with that embodiment or example are included in at least one embodiment or example of the present disclosure. In this specification, illustrative expressions of the aforementioned terms do not necessarily refer to the same embodiment or example. Furthermore, the specific features, structures, materials, or characteristics described may be combined in any suitable manner in one or more embodiments or examples.

In addition, the terms "first" and "second" are used only for descriptive purposes and should not be construed as indicating or implying relative importance or implicitly specifying the number of technical features being referred to. Consequently, features designated as "first" or "second" may explicitly or implicitly include at least one such feature. In the description of the present disclosure, the term "plurality" refers to at least two, such as two, three, or the like, unless otherwise explicitly specified.

In the present disclosure, unless otherwise explicitly defined and limited, terms such as "installed," "connected," "coupled," "fixed," and similar terms should be understood broadly. For example, the connection may be a fixed connection, a detachable connection, or an integral connection; may be a mechanical connection or an electrical connection; may be a direct connection, or an indirect connection via an intermediate medium; may be an internal connection between two elements or an interaction relationship between two elements, unless otherwise explicitly limited. For those skilled in the art, the specific meaning of the aforementioned terms in the present disclosure may be understood according to the actual circumstances.

Although the embodiments of the present disclosure have been shown and described above, it should be understood that the above embodiments are exemplary and should not be construed as limiting the present disclosure. Those skilled in the art may make variations, modifications, substitutions, and alterations to the above embodiments within the scope of the present disclosure.

## Claims

1. A method for controlling a display screen, comprising:
determining a target page view element that changes with switching of a day-night mode of the display screen; and
adjusting, in a case of determining the switching of the day-night mode of the display screen, an attribute of the target page view element according to a current mode of the display screen.

2. The method for controlling a display screen according to claim 1, wherein the target page view element comprises at least one of a page background image, text, a click effect, a text editing box, and a button style.

3. The method for controlling a display screen according to claim 1 or 2, wherein the determining the target page view element that changes with switching of the day-night mode of the display screen comprises:
determining a page view element whose attribute changes with the switching of the day-night mode as the target page view element.

4. The method for controlling a display screen according to any one of claims 1 to 3, wherein the attribute comprises at least one of color, transparency, brightness, contrast, text attribute, and interactive feedback.

5. The method for controlling a display screen according to any one of claims 1 to 4, wherein the adjusting the attribute of the target page view element according to the current mode of the display screen comprises:
controlling, in a case where the display screen is switched from a night mode to a day mode, the attribute of the target page view element to be adjusted to an attribute corresponding to the day mode; and
controlling, in a case where the display screen is switched from the day mode to the night mode, the attribute of the target page view element to be adjusted to an attribute corresponding to the night mode.

6. The method for controlling a display screen according to any one of claims 1 to 5, wherein the determining the switching of the day-night mode of the display screen comprises:
acquiring current position information of a vehicle;
determining sunrise time and sunset time of the position where the vehicle is located based on the position information; and
determining, in a case where current time reaches the sunrise time or the sunset time, the switching of the day-night mode of the display screen.

7. The method for controlling a display screen according to any one of claims 1 to 6, wherein the determining the switching of the day-night mode of the display screen comprises:
acquiring a brightness of a current environment; and
determining, in a case where the brightness reaches a preset brightness threshold, the switching of the day-night mode of the display screen.

8. A computer-readable storage medium having a program stored thereon, wherein the program, when executed by a processor, causes the processor to perform the method for controlling a display screen as defined in any one of claims 1 to 7.

9. A vehicle, comprising: a memory, a processor, and a program stored on the memory and executable by the processor, wherein the program, when executed by the processor, causes the processor to perform the method for controlling a display screen as defined in any one of claims 1 to 7.

10. An apparatus for controlling a display screen, comprising:
a determination module, configured to determine a target page view element that changes with switching of a day-night mode of the display screen; and
a control module, configured to adjust, in a case of determining the switching of the day-night mode of the display screen, an attribute of the target page view element according to a current mode of the display screen.
